# EUROPEAN PATENT SPECIFICATION

(11) **EP 0 728 559 B1**
(45) Date of publication and mention of the grant of the patent: **21.10.1998**
(21) Application number: 96102642.4
(22) Date of filing: 22.02.1996
(51) Int. Cl.: B25J 9/08

(54) **Manipulator**
Handhabungsgerät
Robot industriel

(30) Priority: 24.02.1995 SE 9500683
(43) Date of publication of application: 28.08.1996
(73) Proprietor: ASEA BROWN BOVERI AB, 721 83 Västeras (SE)
(72) Inventor: Kullborg, Ove, 722 31 Västeras (SE); Myklebust, Einar, 724 65 Västeras (SE)
(74) Representative: Boecker, Joachim, Dr.-Ing.

(56) References cited:
- GB-A- 2 264 204
- US-A- 4 602 195

## Description

### TECHNICAL FIELD

The present invention relates to a manipulator according to the precharacterising part of claim 1.

### BACKGROUND ART

A manipulator, for example an industrial robot as disclosed in US-A-4 602 195, has a stand which is rotatably arranged on a foot fixed to a base. The stand supports a first robot arm which is rotatable in relation to the stand. At the outer end of this arm, a second robot arm is rotatably journalled. The outer part of this second arm is rotatable about the longitudinal axis of the second arm and supports, at its outer end, a manipulator hand. The manipulator hand is provided with a tool attachment and consists of two hand parts that allow the tool attachment to be rotatable in two degrees of freedom relative to the second arm. To achieve movement of the mentioned robot arms and the hand parts, a drive means is arranged at each axis. Each such drive means comprises a motor, for example an inverter-fed synchronous motor with permanent rotor magnets, and a reduction gear with a high gear ratio.

Power supply and control of an industrial robot of the kind described above are arranged through supply and control equipment comprising a rectifier and a drive device provided for each drive unit. The rectifier converts a three-phase line voltage into a direct voltage which is supplied to the drive devices. The drive devices are controlled by signals from the control equipment and thereby convert the direct current into a variable alternating current for driving the driving motors of the robot. The variable alternating current is preferably within the frequency range 0 - 400 Hz. The alternating current is created by chopping the direct current, thus producing a pulse train formed of pulses with a variable length and polarity, the purpose of this pulse train being to imitate a sinusoidal alternating current. During such conversion from direct current to alternating current by so-called switching, high-frequency (MHz) transients are created which are superimposed on the fundamental frequency. These transients cause the cable to emit electromagnetic waves, which may disturb other equipment.

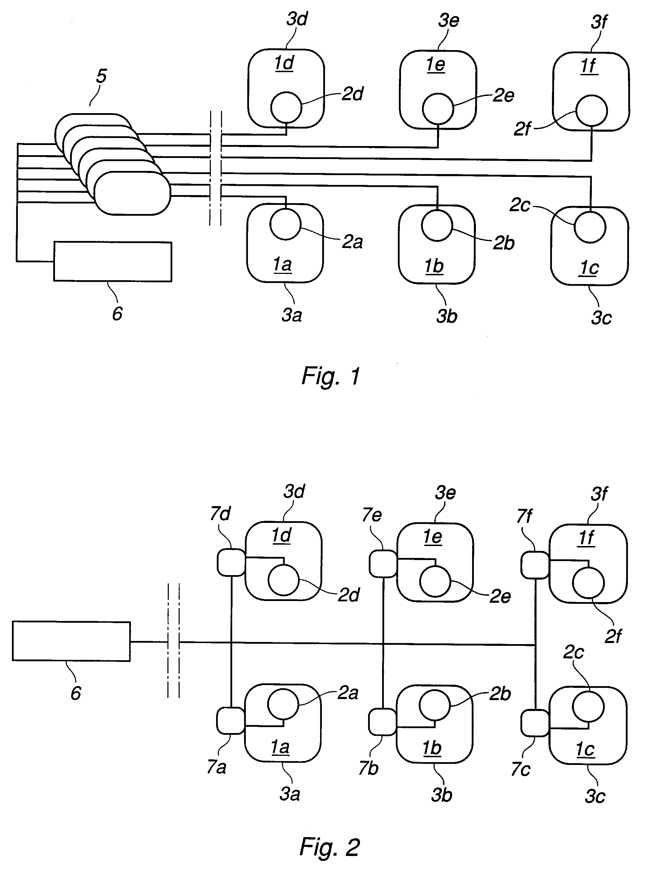

The principle of a drive system for a manipulator according to the prior art is shown in the circuit diagram in Figure 1. Six drive means 1a - 1f, each comprising its own ac motor 2a - 2f and its own reduction gear 3a - 3f, are placed on the manipulator. The motors 2 are each connected, by means of long conductors, to a separate drive device 5a - 5f disposed in a control cabinet. The drive devices 5, the task of which is to convert a direct current into a controllably variable alternating current, are supplied with direct current from a rectifier 6, common to all drive devices and placed in the control cabinet.

The control and supply equipment including the rectifier and the drive devices is normally housed in a cabinet arranged outside the operating range of the manipulator. For driving the manipulator, a multi-conductor cable, with a number of conductors necessary for each drive means, is provided between the control cabinet and the manipulator. The cable is connected to the foot of the manipulator and, from this point, branches out to the different drive means, which are usually placed on the stand and on the second arm. Each one of the six ac motors requires three conductors, which means that the cable comprises 18 conductors. One problem with such a power transmission is that the total length of conductors is considerable and, therefore, costly. Another problem is that the long conductors increase the emission of the high-frequency electromagnetic waves, which increases the risk of disturbance.

Under load the drive devices develop strong heat. Each one of the drive devices comprises a number of electronic components, which at too high temperatures may become damaged. Therefore, the drive devices have to be cooled. An additional problem when the drive devices are placed in a cabinet is that a cooling device must be arranged in the cabinet.

### SUMMARY OF THE INVENTION

The invention aims at developing a manipulator of the above-mentioned kind which eliminates the drawbacks mentioned above. The manipulator is supposed to limit the emission of disturbing electromagnetic waves and to reduce the amount of cables needed. It shall also comprise an efficient cooling of the drive devices.

To achieve this aim the invention suggests a manipulator according to the introductory part of claim 1, which is characterized by the features of the characterizing part of claim 1.

Further developments of the invention are characterized by the features of the additional claims.

According to the invention the drive devices are located on the robot, where they are preferably placed near each individual drive means. The drive devices are applied on the manipulator such that the heat developed from the drive device may be diverted to the manipulator structure and, by convection, be transferred to the surrounding air. From a rectifier in the control cabinet, the drive devices located on the robot are supplied with direct current via one common power supply cable only. Alternatively, also the rectifier may be located on the manipulator, in which case the current supply by alternating current from the three-phase network can be connected directly to the manipulator. The power supply cables arranged between the drive device and the drive means will be extremely short, which greatly limits the emission of disturbing electromagnetic waves.

### BRIEF DESCRIPTION OF THE DRAWINGS

By way of example, the invention will now be described in greater detail with reference to the accompanying drawings showing in
- Figure 1: a drive system of a manipulator with a power-supply system according to the prior art,
- Figure 2: a drive system of a manipulator with a power-supply system according to the invention,
- Figure 3: an industrial robot equipped with a power-supply system according to the invention.

### DESCRIPTION OF THE PREFERRED EMBODIMENTS

The circuit diagram according to Figure 2 shows a drive system for a manipulator with power-supply system according to the invention. Associated with each of the six drive means shown in Figure 1, each of which comprises a motor 2 and a reduction gear 3, is a drive device 7a - 7f, mounted on the manipulator. A rectifier 6 common to all the drive devices is placed in a control cabinet, whereby only a two-conductor power cable jointly supplies direct current to the drive devices. Between the motor and the drive device for the respective drive shaft, only short three-conductor power cables are connected, which greatly reduces the emission of disturbing electromagnetic waves. The rectifier can be equally placed on the manipulator, in which case a mains cable can be connected directly thereto.

The drive devices 7, which have the same task as the known drive devices 5 in Figure 1, are applied on the manipulator for the purpose of obtaining an efficient cooling by good thermal conduction to and convection from the manipulator structure. A lower operating temperature of the drive devices makes it possible to choose less space-demanding electronic components, and therefore the space needed for housing the drive device may, in comparison with the known drive device, be kept smaller. By a suitable choice of components and by the absence of cooling flanges, a space for housing the drive device of about 60 mm x 60 mm x 40 mm may thus be obtained.

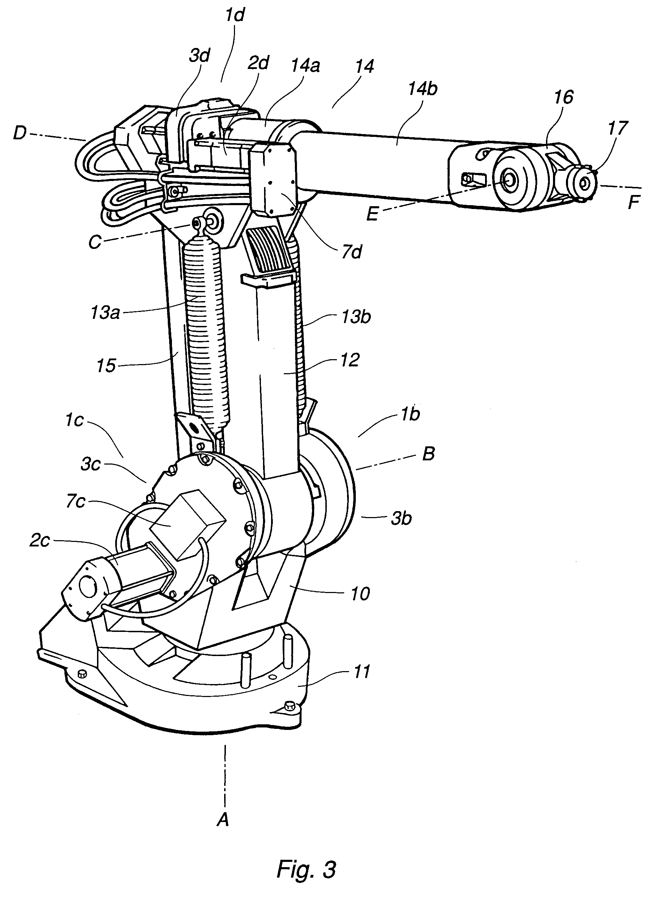

The industrial robot shown in Figure 3 has a stand 10 which is rotatably journalled in a robot foot 11 fixed to a mounting base (not shown), the stand being able to swing around a vertical axis A with the aid of a drive means (not shown) placed on the stand 10. A first robot arm 12 is pivotally journalled in the stand 10 about an axis B and is balanced by two equalizer springs 13a and 13b, which are articulately fixed between the stand 10 and the upper end of the first arm 12. The lower end of the first arm 12 is connected to a drive means 1b which is integrated with the stand 10 and which comprises a motor (not shown) and a reduction gear 3b, to which reduction gear is attached a drive device (not shown). At the upper end of the arm 12, a second robot arm 14 is pivotally journalled about an axis C. The pivoting of the arm 14 is performed over a parallel link 15, the lower end of which is connected to a drive means 1c integrated with the stand and comprising a motor 2c and a reduction gear 3c, to which reduction gear is attached a drive device 7c.

The second robot arm 14 comprises a rear part 14a, which is rotatable about the axis C, and a tubular front part 14b which is journalled in the rear part and is rotatable around the longitudinal axis D of the arm. The outer end portion of the front arm part consists of a wrist which comprises a wrist part 16, rotatable about an axis E, and a tool attachment in the form of a disc 17 which is rotatable about the longitudinal axis F of the wrist part 16. For rotation of the robot parts 14b, 16 and 17, three drive means are arranged on the rear part 14a of the second robot arm. Each one of the drive means placed on the second robot arm 14 comprises a motor and a reduction gear, and a drive device attached to the drive means. Only the motor 2d, the reduction gear 3d and the drive device 7d, which are provided for driving the arm 14b around the axis D, are marked in the figure.

The drive device 7c, arranged for driving the first arm 12 around the axis B, is applied on the reduction gear 3c provided for achieving the arm movement. Through this location, not only the thermal dissipation of the robot structure but also the thermal conductivity of the oil enclosed in the gear housing is utilized for heat conduction. The heat developed in the drive device 7c can thus be rapidly transported to the whole limiting surface of the gear housing. From the envelope surface of the gear housing, the heat is transferred to the surrounding air by convection.

The drive means arranged at the rear part 14a of the second arm have lower power, so the associated drive devices develop less heat. The drive device 7d adapted for driving the front part 14b of the second arm 14 around the axis D is applied directly can the motor 2d adapted for achieving the movement. Sufficient thermal dissipation is obtained by heat transport via the casing of the motor to the robot structure, whereby surplus heat is transferred to the surrounding air by convection from both the motor casing and the robot structure.

An advantageous improvement of the invention is to replace the common rectifier by smaller rectifiers provided for each one of or for groups of drive devices. These smaller rectifiers are placed adjacent to the drive devices. With such a location, it is possible also for the rectifier to become efficiently cooled via the robot structure.

## Claims

1. Manipulator, for example an industrial robot, which manipulator comprises a plurality of drive means (1) for moving the manipulator in its plurality of degrees of freedom, each drive means (1) comprising at least one electric driving motor (2), which is supplied and controlled via a rectifier (6) and a drive device (7), **characterized** in that at least one of said drive devices (7) is arranged on the manipulator, preferably adjacent to its associated drive means (1).

2. Manipulator according to claim 1, **characterized** in that at least one rectifier (6) is arranged on the manipulator.

3. Manipulator according to claim 2, **characterized** in that each of the rectifiers arranged on the manipulator is provided for supplying only one or only a group of drive devices.

4. Manipulator according to any of the preceding claims, **characterized** in that at least one drive device (7) and/or at least one rectifier is mounted on the manipulator in a manner adapted for heat dissipation to the manipulator structure.

5. Manipulator according to any of the preceding claims, **characterized** in that at least one drive means (1) comprises a reduction gear (3) connected to the driving motor and that the associated drive device (7) and/or the associated rectifier is mounted, for heat dissipation, on the gear housing surrounding the reduction gear (3).

## Patentansprüche

1. Manipulator, beispielsweise ein Industrieroboter, der eine Vielzahl von Antriebsvorrichtungen (1) aufweist zur Bewegung des Manipulators in seiner Vielzahl von Freiheitsgraden, wobei jede Antriebsvorrichtung (1) mindestens einen elektrischen Antriebsmotor (2) enthält, der über einen Gleichrichter (6) und eine Speise- und Steuervorrichtung (7) gespeist und gesteuert wird, **dadurch gekennzeichnet**, daß mindestens eine der genannten Speise- und Steuervorrichtungen (7) am Manipulator angeordnet ist, vorzugsweise benachbart zu der zugehörigen Antriebsvorrichtung (1).

2. Manipulator nach Anspruch 1, **dadurch gekennzeichnet**, daß mindestens ein Gleichrichter (6) am Manipulator angeordnet ist.

3. Manipulator nach Anspruch 2, **dadurch gekennzeichnet**, daß jeder der am Manipulator angeordneten Gleichrichter zur Versorgung nur einer oder nur einer Gruppe von Speise- und Steuervorrichtung(en) vorgesehen ist.

4. Manipulator nach einem der vorhergehenden Ansprüche, **dadurch gekennzeichnet**, daß mindestens eine Speise- und Steuervorrichtung (7) und/oder mindestens ein Gleichrichter am Manipulator in der Weise angeordnet sind/ist, daß sie/er Wärme an die Manipulatorkonstruktion abgeben/abgibt.

5. Manipulator nach einem der vorhergehenden Ansprüche, **dadurch gekennzeichnet**, daß mindestens ein Antriebsvorrichtung (1) eine Reduktionsgetriebe (3) enthält, welches an den Antriebsmotor angeschlossen ist, und daß die zugeordnete Speise- und Steuervorrichtung (7) und/oder der zugehörige Gleichrichter zum Zwecke der Wärmeabführung an dem das Reduktionsgetriebe (3) umgebenden Getriebegehäuse angeordnet ist.

## Revendications

1. Manipulateur par exemple robot industriel, qui comprend une pluralité de moyens (1) d'entraînement pour faire se mouvoir le manipulateur dans sa pluralité de degrés de liberté, chaque moyen (1) d'entraînement comprenant au moins un moteur (2) électrique d'entraînement qui est alimenté et commandé par l'intermédiaire d'un redresseur (6) et d'un dispositif (7) d'attaque, caractérisé en ce que le au moins un dispositif (7) d'attaque est monté sur le manipulateur, en étant de préférence adjacent à ses moyens (1) associés d'entraînement,

2. Manipulateur suivant la revendication 1, caractérisé en ce qu'au moins un redresseur (6) est monté sur le manipulateur,

3. Manipulateur suivant la revendication 2, caractérisé en ce que chacun des redresseurs montés sur le manipulateur est prévu pour alimenter seulement l'un des dispositifs d'attaque ou seulement un groupe de dispositifs d'attaque,

4. Manipulateur suivant l'une quelconque des revendications précédentes, caractérisé en qu'au moins un dispositif (7) d'attaque et/au moins un redresseur est monté sur le manipulateur d'une manière propre a dissiper de la chaleur vers la structure du manipulateur,

5. Manipulateur suivant l'une des quelconques revendications précédentes, caractérisé en ce que au moins un moyen (1) d'entraînement comprend un réducteur (3) relié au moteur d'entraînement et en ce que le dispositif (7) associé d'attaque-
et/ou le redresseur associé est monté en vue de dissiper de la chaleur sur le carter entourant le réducteur (3).
